# DEMANDE DE BREVET EUROPEEN

(11) **EP 3 252 441 A1**
(43) Date de publication de la demande: **06.12.2017**
(21) Numéro de dépôt: 17172760.5
(22) Date de dépôt: 24.05.2017
(51) Int. Cl.: G01G 19/07

(54) **DISPOSITIF DE PESÉE ET SYSTÈME DE DÉTERMINATION DE LA MASSE ET DU CENTRE DE GRAVITÉ D'UN AÉRONEF**

(30) Priorité: 03.06.2016 FR 1655066
(71) Demandeur: Airbus (S.A.S.), 31700 Blagnac (FR)
(72) Inventeur: ALONSO TABARES, Diego, 31300 TOULOUSE (FR)
(74) Mandataire: Gicquel, Olivier Yves Gérard

(57) **Abrégé**

- Dispositif de pesée et système de détermination de la masse et du centre de gravité d'un aéronef.
- Ledit dispositif de pesée (1) pour aéronef comprend une plateforme de pesée (2) configurée pour recevoir un train d'atterrissage de l'aéronef et générer des signaux de pesée, une unité de calcul configurée pour calculer une information de pesée à partir des signaux de pesée générés par la plateforme de pesée (2), une unité de communication (3) configurée pour transmettre à un dispositif central et recevoir des signaux dont au moins un signal représentatif de l'information de pesée calculée par l'unité de calcul, une unité de roulage au sol configurée pour déplacer la plateforme de pesée (2) sur une surface.

## Description

### DOMAINE TECHNIQUE

La présente invention concerne un dispositif de pesée et un système comprenant plusieurs de ces dispositifs de pesée pour déterminer la masse et le centre de gravité d'un aéronef.

### ÉTAT DE LA TECHNIQUE

La pesée précise d'un aéronef est généralement effectuée lors d'une action de maintenance. L'action de maintenance se déroule couramment dans un hangar ou dans une installation fermée, après que l'aéronef a été positionné sur un dispositif de calage. Ce dispositif de calage comprend notamment un ensemble de cales et une distance minimale (qui peut être égale à zéro) à respecter entre chacune des cales et un train d'atterrissage de l'aéronef.

La masse utilisée pour la répartition opérationnelle d'un aéronef ou pour les calculs de performance est une combinaison de mesures, d'estimations et de calculs à partir :
- de la masse à vide en ordre d'exploitation (OEW pour « *Operating Empty Weight* » en anglais) de l'aéronef en faisant une moyenne d'un échantillonnage des mesures pour tous les aéronefs d'une flotte,
- de la charge utile à partir d'estimations de la masse de passagers et de bagages en cabine et en soute ainsi que de la masse du fret,
- du carburant dont la masse est mesurée dans le véhicule fournisseur de carburant et/ou dans l'aéronef.

La somme des masses énumérées ci-dessus permet d'obtenir une estimation de masse au décollage (TOW pour « *Take-Off Weight* » en anglais). Toutefois, cette masse estimée n'est pas la masse réelle. Cette masse est utilisée dans le calcul de paramètres de l'aéronef. En particulier, le centre de gravité de l'aéronef est calculé à partir de cette estimation.

Le document FR 2 914 416 décrit un système pour déterminer la masse et le centre de gravité d'un aéronef en service sur un aéroport. Ce système comprend des moyens de pesée intégrés dans le sol et disposés sur une voie de circulation des aéronefs, telle qu'une bretelle d'accès à la piste d'atterrissage. L'aéronef est pesé lorsque ses trains d'atterrissage passent sur les moyens de pesée.

Toutefois, l'intégration des moyens de pesée dans le sol limite l'utilisation du système à certaines configurations d'aéronef.

### EXPOSÉ DE L'INVENTION

La présente invention a pour objet de pallier cet inconvénient en permettant de mesurer de manière précise la masse et le centre de gravité d'un aéronef en service quelle que soit sa configuration.

À cet effet, l'invention concerne un dispositif de pesée pour aéronef.

Selon l'invention, le dispositif comprend :
- une plateforme de pesée configurée pour recevoir un train d'atterrissage de l'aéronef et générer des signaux de pesée,
- une première unité de calcul configurée pour calculer une information de pesée à partir des signaux de pesée générés par la plateforme de pesée,
- une première unité de communication configurée pour transmettre à un dispositif central et recevoir des signaux, dont au moins un signal représentatif de l'information de pesée calculée par la première unité de calcul,
- une unité de roulage au sol configurée pour déplacer la plateforme de pesée sur une surface.

Ainsi, grâce à l'unité de roulage au sol, le dispositif de pesée peut être déplacé afin d'être positionné à différents endroits accessibles notamment à un train d'atterrissage d'un aéronef. Ce dispositif de pesée mobile peut être utilisé pour mesurer de manière précise la masse et le centre de gravité d'un aéronef comme précisé ci-dessus.

Selon une particularité, l'unité de roulage au sol comprend :
- au moins une roue motrice et directrice apte à être entraînée par un module moteur et à être dirigée par un module directeur,
- au moins une roue menée,
la première unité de communication étant configurée pour recevoir d'un module de contrôle des signaux de commande susceptibles de commander l'unité de roulage au sol.

Avantageusement, le dispositif comprend une unité de calage configurée pour caler le train d'atterrissage de l'aéronef sur la plateforme de pesée lorsque le dispositif de pesée est positionné au niveau du train d'atterrissage, l'unité de calage comprenant :
- une paire de cales,
- un module d'actionnement de la paire de cales configuré pour contrôler les déplacements de la paire de cale afin que le train d'atterrissage de l'aéronef soit calé entre les cales,
la première unité de communication étant configurée pour recevoir d'un module de contrôle des signaux de commande susceptibles de commander le module d'actionnement de la paire de cales, la première unité de communication étant également configurée pour émettre un signal de confirmation de calage lorsque l'aéronef est calé par la paire de cales.

De plus, le dispositif comprend un ensemble de rampes pliables configuré pour permettre l'accès du train d'atterrissage de l'aéronef à la plateforme de pesée, l'ensemble de rampes pliables étant également configuré pour permettre la sortie du train d'atterrissage de l'aéronef de la plateforme de pesée.

De façon avantageuse, la plateforme de pesée comprend une matrice de cellules de charge, chaque cellule de charge étant configurée pour générer et transmettre un signal de pesée à la première unité de calcul configurée pour calculer l'information de pesée.

En outre, le dispositif comprend en outre au moins une unité de prise de vues, chaque unité de prise de vues étant configurée pour générer un signal vidéo représentatif d'une prise de vues, la première unité de communication étant apte à émettre des signaux vidéo représentatifs de la prise de vues générée par chaque unité de prise de vues.

Par ailleurs, le dispositif comprend en outre une unité de positionnement configurée pour générer des signaux représentatifs de la position du dispositif de pesée, la première unité de communication étant apte à émettre des signaux représentatifs de la position du dispositif de pesée.

De manière facultative, le dispositif comprend en outre une unité de détermination de paramètres environnementaux étant susceptible de générer des signaux représentatifs des paramètres environnementaux de la position où le dispositif de pesée est susceptible de se trouver, l'unité de détermination de paramètres environnementaux étant configurer pour transmettre à la première unité de calcul les signaux représentatifs des paramètres environnementaux, la première unité de calcul intégrant ces signaux au calcul de l'information de pesée.

Avantageusement, le dispositif comprend en outre un module de contrôle, ledit module de contrôle comprenant :
- une première unité de saisie configurée pour générer des signaux de commande aptes à commander l'unité de roulage au sol du dispositif de pesée,
- une deuxième unité de saisie configurée pour générer des signaux de commande aptes à commander le module d'actionnement de la paire de cales du dispositif de pesée,
- une première unité d'affichage configurée pour afficher la position du dispositif de pesée à partir des signaux représentatifs de la position du dispositif de pesée émis par la première unité de communication,
- une deuxième unité de communication configurée pour émettre les signaux de commande aptes à commander l'unité de roulage au sol et les signaux de commande aptes à commander le module d'actionnement de la paire de cales et configurée pour recevoir les signaux représentatifs de la position du dispositif de pesée.

Ainsi, grâce au module de contrôle, les dispositifs de pesée peuvent être disposés les uns par rapport aux autres selon une configuration correspondant aux positions des trains d'atterrissage de l'aéronef.

De plus, le dispositif de pesée comprend une deuxième unité d'affichage configurée pour afficher des images vidéo à partir des signaux vidéo représentatifs d'une prise de vues générée par la ou les unités de prise de vues du dispositif de pesée.

L'invention concerne également un système de détermination de la masse et du centre de gravité d'un aéronef.

Selon l'invention le système comprend :
- au moins un dispositif de pesée tel que décrit ci-dessus,
- un dispositif central configuré pour déterminer la masse de l'aéronef et la position du centre de gravité de l'aéronef,
- un dispositif utilisateur configuré pour recevoir un signal représentatif de la masse de l'aéronef et un signal représentatif de la position du centre de gravité de l'aéronef.

Selon une particularité, le dispositif central comprend :
- une mémoire stockant une base de données répertoriant des caractéristiques dimensionnelles d'aéronefs,
- une deuxième unité de calcul configurée pour calculer la masse et une position du centre de gravité de l'aéronef à partir, d'une part, d'une information de pesée transmise par chaque dispositif de pesée et, d'autre part, de caractéristiques dimensionnelles de l'aéronef extraites de la base de données,
- une troisième unité de communication configurée pour transmettre au dispositif utilisateur un signal représentatif de la masse de l'aéronef et un signal représentatif de la position du centre de gravité de l'aéronef calculés par la deuxième unité de calcul.

Le dispositif utilisateur comprend :
- une quatrième unité de communication de l'aéronef configurée pour recevoir un signal de confirmation de calage, un signal représentatif de la masse de l'aéronef et un signal représentatif de la position du centre de gravité de l'aéronef,
- une troisième unité d'affichage de l'aéronef configurée pour afficher la masse de l'aéronef et le centre de gravité de l'aéronef à partir du signal représentatif de la masse de l'aéronef et du signal représentatif de la position du centre de gravité de l'aéronef transmis par la troisième unité de communication,
- une quatrième unité d'affichage de l'aéronef configurée pour afficher une confirmation du calage de l'aéronef à partir du signal de confirmation de calage émis par une première unité de communication d'un dispositif de pesée.

L'invention concerne aussi un procédé d'utilisation du système de détermination de la masse et du centre de gravité d'un aéronef tel que décrit ci-dessus.

Selon l'invention, le procédé comprend :
- une étape de pré-positionnement de dispositifs de pesée à un endroit où l'aéronef est destiné à s'arrêter, le nombre de dispositifs de pesée ayant été préalablement défini à partir du nombre de trains d'atterrissage devant être utilisés pour la mesure de la pesée,
- une étape de positionnement final des dispositif de pesée à l'aide d'une unité de roulage au sol de chaque dispositif de pesée contrôlée par un module de contrôle selon des positions correspondant aux positions des trains d'atterrissage de l'aéronef,
- une étape de roulage de l'aéronef sur les dispositifs de pesée,
- une étape de pesée de l'aéronef sur des plateformes de pesée des dispositifs de pesée,
- une étape de détermination de la masse et de la position du centre de gravité de l'aéronef par un dispositif central,
- une étape de transmission à un dispositif utilisateur d'un signal représentatif de la masse de l'aéronef et un signal représentatif de la position du centre de gravité de l'aéronef,
- une étape d'affichage sur une unité d'affichage du dispositif utilisateur de la masse de l'aéronef et de la position du centre de gravité de l'aéronef.

De plus, l'étape de détermination de la masse et de la position du centre de gravité est précédée d'une étape de calage des trains d'atterrissage de l'aéronef sur au moins une plateforme de pesée.

Par ailleurs, l'étape de positionnement final des dispositifs de pesée est précédée d'une étape de réception par le module de contrôle d'un signal représentatif de la position des trains d'atterrissage de l'aéronef.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue de profil du dispositif de pesée selon un premier mode de réalisation ;
- la figure 2 représente une vue de dessus du dispositif de pesée ;
- la figure 3 représente une vue de profil du dispositif de pesée ;
- la figure 4 représente une vue en perspective du dispositif de pesée selon un deuxième mode de réalisation ;
- la figure 5 représente une vue de dessus du système de détermination de la masse et du centre de gravité d'un aéronef selon un mode de réalisation et d'un aéronef s'approchant du système ;
- la figure 6 représente une vue de dessus du système de détermination de la masse et du centre de gravité et d'un aéronef dont les trains d'atterrissage sont sur le point de se positionner sur les dispositifs de pesée ;
- la figure 7 représente une vue de dessous du système de détermination de la masse et du centre de gravité et d'un aéronef dont les trains d'atterrissage sont disposés sur les dispositifs de pesée ; et
- la figure 8 représente un logigramme du procédé d'utilisation du système de détermination de la masse et du centre de gravité d'un aéronef.

### DESCRIPTION DÉTAILLÉE

La suite de la description fera référence aux figures citées ci-dessus.

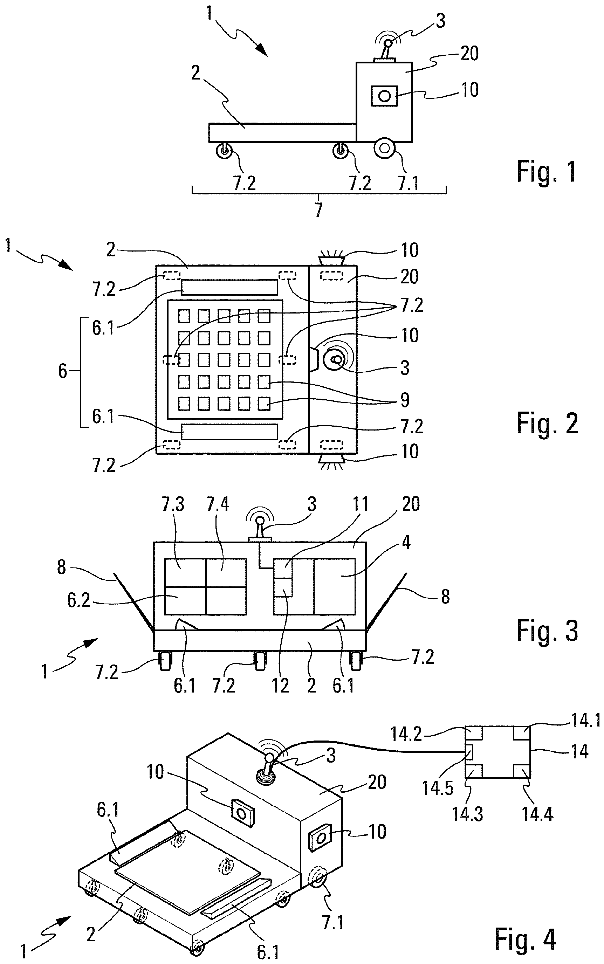

Le dispositif permettant d'illustrer l'invention et représenté sur les figures 1 à 4 est un dispositif de pesée 1 pour un aéronef AC, notamment un avion de transport.

Dans l'ensemble de la description, le terme « horizontal » est relatif à une direction parallèle à l'axe longitudinal de l'aéronef AC, le terme « latéral » est relatif à une direction parallèle à la surface du sol et perpendiculaire à l'axe longitudinal de l'aéronef AC et le terme « vertical » est relatif à une direction perpendiculaire à la surface du sol et à l'axe longitudinal de l'aéronef AC.

Selon un premier mode de réalisation, le dispositif de pesée 1 comprend :
- une plateforme de pesée 2 configurée pour recevoir un train d'atterrissage 5 de l'aéronef AC et générer des signaux de pesée,
- une unité de roulage au sol 7 configurée pour déplacer la plateforme de pesée 2 sur une surface,
- une unité de calcul 4 configurée pour calculer une information de pesée à partir des signaux de pesée générés par la plateforme de pesée 2, et
- une unité de communication 3 configurée pour émettre et recevoir des signaux, dont au moins un signal représentatif de l'information de pesée calculée par l'unité de calcul 4.

À titre d'exemple, l'unité de calcul 4 et l'unité de communication 3 sont intégrées dans un caisson 20 fixé à la plateforme de pesée 2.

Selon une variante de réalisation, l'unité de communication 3 comprend une antenne fixée sur le caisson 20.

Selon une variante de réalisation, le dispositif de pesée 1 comprend un ensemble de rampes pliables 8 pour permettre l'accès d'un train d'atterrissage 5 de l'aéronef AC à la plateforme de pesée 2. L'ensemble de rampes pliables 8 permet également la sortie du train d'atterrissage 5 de l'aéronef AC de la plateforme de pesée 2.

À titre d'exemple, chaque rampe 8 comprend un plan incliné dont un premier bord est configuré pour se poser sur une surface de circulation de l'aéronef AC et un deuxième bord, opposé au premier bord, est disposé au niveau de la plateforme de pesée 2. Selon une variante de réalisation, chaque rampe 8 est fixée en rotation par le deuxième bord pour permettre le dépôt de chaque rampe 8 sur la plateforme de pesée 2 dans un état replié du dispositif de pesée 1. Selon une configuration, un module actionneur (non représenté) peut contrôler le pliement et le dépliement de chaque rampe 8.

Avantageusement, le dispositif de pesée 1 comprend une unité de calage 6 configurée pour caler le train d'atterrissage 5 de l'aéronef AC sur la plateforme de pesée 2 lorsque le dispositif de pesée 1 est positionné au niveau du train d'atterrissage 5.

Comme représenté sur la figure 3, l'unité de calage 6 comprend une paire de cales 6.1 et un module d'actionnement 6.2 de la paire de cales 6.1 configuré pour contrôler les déplacements de la paire de cales 6.1 afin que le train d'atterrissage 5 de l'aéronef AC soit calé entre les cales 6.1, selon la procédure de calage définie par la compagnie aérienne propriétaire de l'aéronef et/ou l'aéroport où est réalisée la mesure de pesée.

Par exemple, chaque cale 6.1 est disposée de part et d'autre de la plateforme de pesée 2.

À titre d'exemple, une cale 6.1 présente la forme d'un secteur de cylindre. Cette cale 6.1 possède donc une section transversale de la forme d'un secteur circulaire. Ce secteur circulaire est délimité par deux rayons formant un angle entre eux et un arc de cercle. Un des rayons du secteur circulaire défini une surface d'appui configurée pour recevoir l'appui d'un train d'atterrissage 5 à caler.

Le module d'actionnement 6.2 contrôle l'angle entre le rayon définissant la surface d'appui et la surface de la plateforme de pesée 2.

Selon une autre variante de réalisation, la cale 6.1 présente une section transversale de forme triangulaire ou toute autre forme adaptée pour caler le train d'atterrissage 5 d'un aéronef AC.

Le module d'actionnement 6.2 contrôle un déplacement vertical des cales 6.1 et notamment une hauteur de sortie des cales 6.1 au-dessus de la plateforme 2. Ainsi, le module d'actionnement 6.2 permet de sortir ou d'escamoter la paire de cales 6.1 de la plateforme 2.

Selon une variante, le module d'actionnement 6.2 contrôle également un déplacement latéral et longitudinal d'au moins une cale 6.1. À titre d'exemple, ce module d'actionnement comprend une vis sans fin motorisée commandée par le module d'actionnement 6.2.

De préférence, l'unité de communication 3 émet un signal de confirmation de calage lorsque l'aéronef AC est calé par la paire de cales 6.1.

Selon une variante de réalisation, en fonction de l'aéronef AC à caler, l'unité de communication 3 émet un signal de confirmation de calage lorsque la hauteur de cale 6.1 au-dessus de la surface de la plateforme de pesée 2 correspond à une hauteur-référence dépendante de l'aéronef AC.

Selon une autre variante de réalisation, la surface d'appui d'au moins une cale 6.1 comprend un capteur (non représenté) configuré pour détecter le contact du train d'atterrissage 5 avec le capteur. Lorsque le contact avec le train d'atterrissage 5 est détecté par le capteur, le capteur transmet un signal à l'unité de communication 3. Selon cette variante de réalisation, le capteur est également configuré pour détecter la fin du contact entre la cale 6.1 et le train d'atterrissage (à la fin d'une opération de pesée) et transmettre un signal de sortie de calage à l'unité de communication 3.

Selon chacune des variantes de réalisation, l'unité de communication 3 transmet le signal de confirmation de calage ou de sortie de calage à une unité d'affichage 17 de l'aéronef AC.

Selon une autre variante de réalisation, la liaison entre la plateforme de pesée 2 et le caisson 20 comprend une liaison glissière autorisant le déplacement de la plateforme de pesée 2 par rapport au caisson 20.

Selon une variante de réalisation, la plateforme de pesée 2 comprend une matrice de cellules de charge 9. Chaque cellule de charge 9 génère et transmet un signal de pesée à l'unité de calcul 4 configurée pour calculer l'information de pesée. À partir des signaux de pesée transmis par chaque cellule de charge 9, l'unité de calcul 4 détermine l'information de pesée.

À titre d'exemple, les cellules de charge 9 correspondent à des cellules de charge à fibres optiques.

De façon facultative, la plateforme de pesée 2 comprend un capteur (non représenté) configuré pour mesurer la pression des pneumatiques du train d'atterrissage 5.

Avantageusement, le dispositif de pesée 1 comprend également une unité de détermination de paramètres environnementaux 12. L'unité de détermination de paramètres environnementaux 12 est susceptible de générer des signaux représentatifs des paramètres environnementaux de la position géographique où le dispositif de pesée 1 est susceptible de se trouver.

À titre d'exemple, les paramètres environnementaux correspondent à des paramètres susceptibles d'influencer la précision des mesures de la plateforme de pesée 2 de l'aéronef. Ces paramètres peuvent être des paramètres météorologiques tels que la vitesse du vent et/ou la direction du vent, ou la pluie. Ils peuvent être également des paramètres géographiques tels que l'inclinaison de la surface sur laquelle est disposé le dispositif de pesée 1 et/ou l'accélération de la pesanteur. Ils peuvent être aussi des paramètres dépendant du type d'aéronef AC, tels que les dimensions de l'aéronef AC et/ou l'empreinte au sol de chaque train d'atterrissage 5 de l'aéronef AC. Les paramètres dépendant du type d'aéronef AC peuvent être transmis par un centre de contrôle de la circulation aérienne (ATCC pour « *Air Traffic Control Center* » en anglais) ou par l'aéronef AC dont on détermine la masse et le centre de gravité.

L'unité de détermination de paramètres environnementaux 12 est configurée pour transmettre à l'unité de calcul 4 les signaux représentatifs des paramètres environnementaux. La première unité de calcul 4 intègre ces signaux au calcul de l'information de pesée.

Ainsi, une précision de 1% peut être atteinte pour le calcul de la masse de l'aéronef AC et de la position de son centre de gravité.

De façon optionnelle, le dispositif de pesée 1 comprend une unité de ventilation (non représentée) pour ventiler le ou les freins du train d'atterrissage 5.

Préférentiellement, le dispositif de pesée 1 comprend également une unité de radio-identification (RFID pour « Radio Frequency Identification » en anglais) tel qu'un lecteur de radio-étiquette (« RFID tag » en anglais). La radio-étiquette (non représentée) comprend une mémoire contenant des informations sur l'aéronef AC et/ou des informations sur le type de pneumatiques équipant le train d'atterrissage 5. L'unité de radio-identification (non représentée) est configuré pour lire la radio-étiquette afin de récupérer les informations qui y sont contenues.

Par exemple, l'unité de détermination de paramètres environnementaux 12, l'unité de ventilation ou l'unité de radio-identification sont comprises dans le caisson 20.

Le dispositif de pesée 1 comprend un espace mémoire (non représentée) configurée pour stocker l'information de pesée calculée par l'unité de calcul 4. À titre d'exemple, l'espace mémoire est comprise dans le caisson 20.

Avantageusement, l'unité de roulage au sol 7 comprend des roues permettant de déplacer le dispositif de pesée 1.

Selon le premier mode de réalisation, le dispositif de pesée 1 est positionné manuellement devant un train d'atterrissage 5 grâce à l'unité de roulage au sol 7. Le train d'atterrissage 5 se positionne en suivant sur la plateforme de pesée 2.

Selon un deuxième mode de réalisation illustré sur la figure 4, le dispositif de pesée 1 comprend également un module de contrôle 14 configuré pour contrôler un déplacement de chaque dispositif de pesée 1 et permettant notamment de commander à distance l'unité de roulage au sol 7 et le module d'actionnement 6.2 de la paire de cales 6.1.

Dans ce deuxième mode de réalisation, l'unité de roulage au sol 7 comprend au moins une roue motrice et directrice 7.1 et au moins une roue menée 7.2. La roue motrice et directrice 7.1 est entraînée par un module moteur 7.3 et est dirigée par un module directeur 7.4. Selon une variante de réalisation, le module moteur 7.3 et le module directeur 7.4 sont intégrés dans ledit caisson 20.

Selon une variante de réalisation, l'unité de roulage au sol 7 comprend trois roues motrices et directrices 7.1 et six roues menées 7.2 réparties régulièrement sous le dispositif de pesée 1. De façon générale, le nombre de roues motrices et directrices 7.1 et le nombre de roues menées 7.2 dépendent des dimensions de la plateforme de pesée 2. Les dimensions de la plateforme de pesée 2 sont adaptées aux dimensions du train d'atterrissage et donc au type d'aéronef AC (moyen-courrier, long-courrier, gros porteur...).

À titre d'exemple, le module moteur 7.3 comprend un moteur électrique et une batterie configurée pour alimenter ce moteur électrique.

Selon une variante de réalisation, l'unité de roulage au sol 7 comprend aussi un module de freinage (non représenté) permettant d'arrêter le déplacement du dispositif de pesée 2.

Dans une variante de réalisation particulier, les roues motrices et directrices 7.1 sont fixées et réparties sous le caisson 20.

Avantageusement, le dispositif de pesée 1 comprend une unité d'amortissement (non représenté) de la plateforme de pesée 2, afin d'absorber l'augmentation de pression générée par l'appui du train sur le dispositif de pesée 1.

Selon une variante de réalisation, cette unité d'amortissement équipe chacune des roues menées 7.2, couplé à une unité d'escamotage de la roue menée 7.2. Cette unité d'escamotage comprend, par exemple, un évidement réalisé dans la plateforme de pesée 2, et destiné en utilisation à loger la roue menée 7.2.

Avantageusement, le module de contrôle 14 comprend :
- une unité de saisie 14.1 configurée pour générer des signaux de commande aptes à commander l'unité de roulage au sol 7,
- une unité d'affichage 14.3 configurée pour afficher la position de chaque dispositif de pesée 1 à partir des signaux représentatifs de la position de chaque dispositif de pesée 1,
- une unité de communication 14.5 configurée pour émettre les signaux de commande aptes à commander l'unité de roulage au sol 7 et les signaux de commande aptes à commander le module d'actionnement 6.2 de l'unité de calage 6 et configurée pour recevoir les signaux représentatifs de la position géographique de chaque dispositif de pesée 1 et signaux vidéo représentatifs de la prise de vues.

Selon une autre particularité, le module de contrôle 14 comprend une unité de saisie 14.2 configurée pour générer des signaux de commande aptes à commander le module d'actionnement 6.2 de l'unité de calage 6 d'au moins un dispositif de pesée 1. Ces signaux de commande sont reçus par le module d'actionnement 6.2 de l'unité de calage par l'intermédiaire de l'unité de communication 3 du ou des dispositifs de pesée 1.

Les signaux de commande générés par l'unité de saisie 14.1 du module de contrôle 14 sont transmis au module moteur 7.3, au module directeur 7.4 et/ou au module de freinage d'au moins un dispositif de pesée 1 par l'intermédiaire de l'unité de communication 3 du ou des dispositifs de pesée 1.

Selon chacune des variantes de réalisation, l'unité de communication 3 transmet un signal de confirmation de calage à une unité d'affichage 17 de l'aéronef AC ou à une unité d'affichage d'un dispositif utilisateur 15 afin d'afficher la confirmation de calage de l'aéronef.

L'envoi d'un signal de calage qui confirme le calage de l'aéronef AC permet de réduire le besoin en personnel qui place les cales 6.1. Cela permet aussi de diminuer le temps d'escale (TRT pour « *turnaround time »* en anglais) de trente secondes à une minute.

Dans une variante particulière de réalisation, le dispositif de pesée 1 comprend au moins une unité de prise de vues 10. Chaque unité de prise de vues 10 peut être disposée de sorte que l'ensemble des champs des unités de prise de vues 10 couvre un angle de 360° et donc l'ensemble des directions susceptibles d'être empruntées par le dispositif de pesée 1.

Selon une variante, l'unité de prise de vues 10 est installée sur un dispositif mobile en rotation autour d'un axe vertical (non représenté).

Selon une autre variante, le dispositif 1 comprend une pluralité d'unités de prise de vues 10 disposées de manière telle que la direction de prise de vues d'une unité de prise de vues 10 soit perpendiculaire à la direction de prise de vues d'une autre unité de prise de vues 10. À titre d'exemple, le dispositif de pesée 1 comprend au moins trois unités de prise de vues 10 disposées sur au moins trois faces du caisson 20.

Chaque unité de prise de vues 10 est susceptible de générer un signal vidéo représentatif d'une prise de vues.

À titre d'exemple, l'unité de prise de vues 10 comprend une caméra vidéo de type dispositif à transfert de charges (CCD pour « Charge Coupled Device » en anglais).

Le signal vidéo représentatif d'une prise de vues d'au moins un dispositif de pesée 1 est transmis au module de contrôle 14 par l'intermédiaire de l'unité de communication 3 du ou des dispositifs de pesée 1.

Le module de contrôle 14 comprend alors une unité d'affichage 14.4 configurée pour afficher des images vidéo à partir des signaux vidéo représentatifs de la prise de vues générée par chaque unité de prise de vues 10.

Selon une particularité, le dispositif de pesée 1 comprend une unité de positionnement 11 apte à générer des signaux représentatifs de la position géographique du dispositif de pesée 1. Par exemple, l'unité de positionnement 11 est compris dans le caisson 20.

De façon non limitative, l'unité de positionnement 11 comprend un système de géolocalisation par satellite de type GPS (pour « Global Positioning System » en anglais).

Les signaux représentatifs de la position géographique d'au moins un dispositif de pesée 1 sont transmis au module de contrôle 14 par l'intermédiaire de l'unité de communication 3 du ou des dispositifs de pesée 1.

Selon une variante de réalisation, le module de contrôle 14 comprend une base de données dans laquelle est stockée au moins une valeur de la hauteur-référence correspondant à une hauteur de cale 6.1 au-dessus de la plateforme de pesée 2. Par exemple, la base de donnée comprend plusieurs hauteur-référence, chaque hauteur-référence étant associée à un type d'aéronef AC.

Selon une variante de réalisation, la liaison entre l'unité de communication 3 de chaque dispositif de pesée 1 et l'unité de communication du module de contrôle 14 est filaire. Selon une autre variante de réalisation, cette liaison est réalisée par ondes électromagnétiques.

Il est alors possible de contrôler à distance la position d'un dispositif de pesée 1 par rapport à un autre. Cela facilite le placement des dispositifs de pesée 1 dans une configuration correspondant aux positions des trains d'atterrissage 5 de l'aéronef AC.

Le dispositif de pesée 1 tel que décrit ci-dessus peut être utilisé dans un système de détermination de la masse et du centre de gravité d'un aéronef AC, appelé par la suite « système de détermination ».

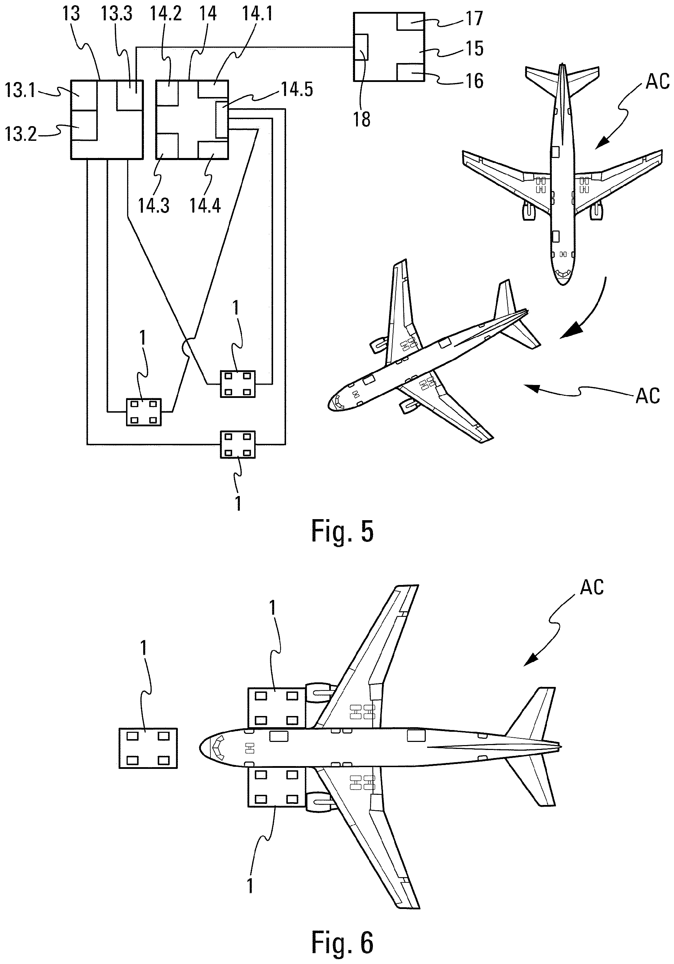

Comme représenté sur la figure 5, le système de détermination de la masse comprend au moins un dispositif de pesée 1 tel que décrit ci-dessus et un dispositif central 13 configuré pour déterminer la masse de l'aéronef AC et la position du centre de gravité de l'aéronef AC .

Le système de détermination comprend également un dispositif utilisateur 15 configuré pour recevoir un signal représentatif de la masse de l'aéronef AC et un signal représentatif de la position du centre de gravité de l'aéronef AC.

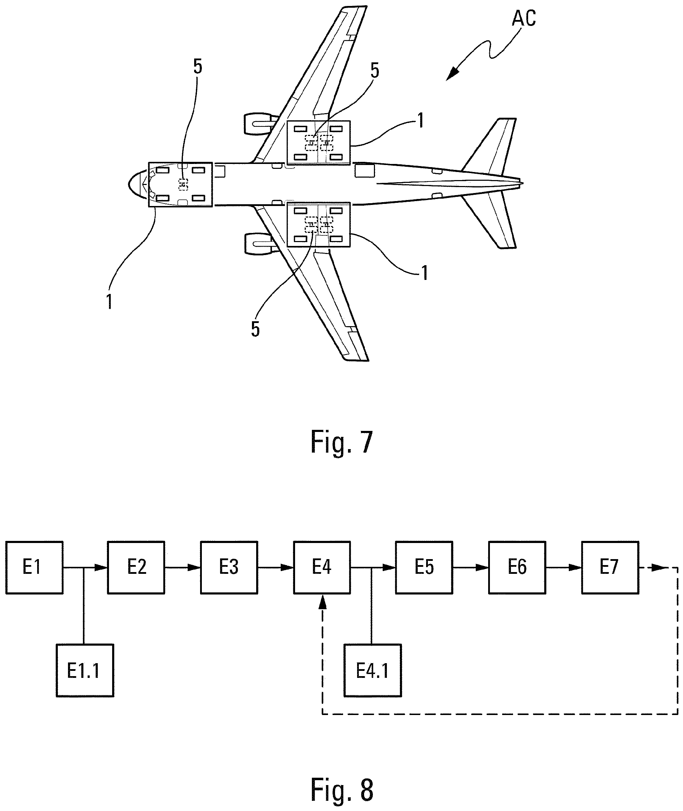

De préférence, le système de détermination comprend trois dispositifs de pesée 1. Chaque dispositif de pesée 1 est destiné à recevoir un train d'atterrissage 5 d'un aéronef AC, comme représenté sur la figure 7.

Selon un mode de réalisation, le dispositif central 13 comprend (figure 5) :
- une mémoire 13.1 stockant une base de données répertoriant des caractéristiques dimensionnelles d'aéronefs, comme, par exemple, les poids de référence des aéronefs,
- une unité de calcul 13.2 configurée pour calculer la masse et une position du centre de gravité de l'aéronef AC à partir, d'une part, de l'information de pesée transmise par chaque dispositif de pesée 1 et, d'autre part, de caractéristiques dimensionnelles de l'aéronef AC extraites de la base de données,
- une unité de communication 13.3 configurée pour transmettre à un dispositif utilisateur un signal représentatif de la masse de l'aéronef AC et un signal représentatif de la position du centre de gravité de l'aéronef AC calculés par la deuxième unité de calcul 13.2.

Selon un mode de réalisation particulier, le dispositif utilisateur 15 comporte :
- une unité d'affichage 16 de l'aéronef AC configurée pour afficher la masse de l'aéronef AC et le centre de gravité de l'aéronef AC à partir du signal représentatif de la masse de l'aéronef AC et du signal représentatif de la position du centre de gravité de l'aéronef AC transmis par l'unité de communication 13.3,
- une unité de communication 18 de l'aéronef AC configurée pour recevoir le signal de confirmation de calage, le signal représentatif de la masse de l'aéronef AC et le signal représentatif de la position du centre de gravité de l'aéronef AC.

Selon une particularité, le dispositif utilisateur 15 contient une unité d'affichage 17 de l'aéronef AC configurée pour afficher une confirmation du calage de l'aéronef AC à partir du signal de calage émis par l'unité de communication 3 d'un dispositif de pesée 1 lorsque l'aéronef AC est calé par la paire de cales 6.1 dudit dispositif de pesée 1.

Selon une variante de réalisation, le dispositif utilisateur est installé dans le cockpit de l'aéronef AC.

Selon une autre variante, le dispositif utilisateur 15 correspond à une unité d'affichage d'un centre de contrôle de la circulation aérienne ou d'un centre de contrôle d'aéroport.

De même, la liaison entre l'unité de communication 3 de chaque dispositif de pesée 1 et une unité de communication du dispositif central 13 est filaire ou par ondes électromagnétiques.

Dans un mode de réalisation préféré, le système de détermination de la masse et du centre de gravité d'un aéronef AC tel que décrit ci-dessus est utilisé en mettant en oeuvre le procédé suivant.

Ledit procédé comprend, comme représenté sur la figure 9 :
- une étape E1 de pré-positionnement des dispositifs de pesée 1 à un endroit géographique où l'aéronef AC est destiné à s'arrêter, le nombre de dispositifs de pesée 1 ayant été préalablement défini à partir du nombre de train d'atterrissage devant être utilisés pour la mesure de la pesée,
- une étape E2 de positionnement final des dispositifs de pesée 1 à l'aide de l'unité de roulage au sol 7 de chaque dispositif de pesée 1 contrôlée par le module de contrôle 14 selon des positions correspondant aux positions des trains d'atterrissage 5 de l'aéronef AC,
- une étape E3 de roulage de l'aéronef AC sur les dispositifs de pesée 1,
- une étape E4 de pesée de l'aéronef AC sur les plateformes de pesée 2 des dispositifs de pesée 1,
- une étape E5 de détermination de la masse et de la position du centre de gravité de l'aéronef AC par le dispositif central 14,
- une étape E6 de transmission à un dispositif utilisateur 15 d'un signal représentatif de la masse de l'aéronef AC et un signal représentatif de la position du centre de gravité de l'aéronef AC,
- une étape E7 d'affichage sur une unité d'affichage 16 du dispositif utilisateur 15 de la masse de l'aéronef AC et de la position du centre de gravité de l'aéronef AC.

Avantageusement, les différentes étapes E4 à E7 sont réalisées en continu de l'envoi du signal de confirmation de calage à l'envoi du signal de sortie de calage.

À l'étape E2 de positionnement final des dispositifs de pesée 1, le module de contrôle 14 transmet aux dispositifs de pesée 1 des signaux de commande aptes à commander les unités de roulage au sol 7. Les signaux de commande comprennent des positions géographiques de chaque train d'atterrissage 5 de l'aéronef AC. Chaque position géographique est destinée à un dispositif de pesée 1. Les unités de roulage au sol 7 des dispositifs de pesée 1 contrôlées par le module de contrôle 14 positionnent les dispositifs de pesée 1 selon les positions géographiques contenues dans les signaux de commande qui correspondent aux positions des trains d'atterrissage 5 de l'aéronef AC.

Lors de l'étape E3 de roulage de l'aéronef AC, chaque train d'atterrissage 5 de l'aéronef AC se place sur la plateforme de pesée 2 d'un dispositif de pesée 1. Ainsi, à l'étape E4 de pesée de l'aéronef AC, pour chaque train d'atterrissage 5, la plateforme de pesée 2 génère des signaux de pesée qui sont fonction de la pression exercée par le train d'atterrissage sur la plateforme de pesée 2. L'unité de calcul 4 de chaque dispositif de pesée 1 calcule alors une information de pesée à partir des signaux de pesée. L'unité de communication de chaque dispositif de pesée 1 envoie ensuite l'information de pesée au dispositif central 13.

À l'étape E5 de détermination de la masse et de la position du centre de gravité, l'unité de calcul 13.2 du dispositif central 13 calcule la masse et la position du centre de gravité de l'aéronef AC à partir, d'une part, des informations de pesée envoyées par les dispositifs de pesée 1 et, d'autre part, de caractéristiques dimensionnelles de l'aéronef AC extraites d'une base de données stockée dans une mémoire 13.1 du dispositif central 13.

Un signal représentatif de la masse de l'aéronef AC et un signal représentatif de la position du centre de gravité de l'aéronef AC est ensuite transmis à un dispositif utilisateur 15 par l'unité de communication 13.3 du dispositif central 13 pendant l'étape E6 de transmission. Ces signaux permettent alors un affichage de la masse et de la position du centre de gravité de l'aéronef sur une unité d'affichage 16 du dispositif utilisateur 15.

Selon une particularité, l'étape E5 de détermination de la masse et de la position du centre de gravité est précédée d'une étape E4.1 de calage des trains d'atterrissage 5 de l'aéronef AC sur au moins une plateforme de pesée 2. Selon le type d'aéronef AC, certaines unités de cales 6 ne sont pas commandées par leurs modules d'actionnement 6.2 pour caler le train d'atterrissage 5 de leur dispositif de pesée 1. Par exemple, pour certains aéronefs AC, l'unité de calage 6 dont le dispositif de pesée 1 est destiné au train d'atterrissage 5 avant de l'aéronef AC n'est pas actionnée par l'unité d'actionnement 6.2 du dispositif de pesée 1.

Selon une autre particularité, l'étape E2 de positionnement final des dispositifs de pesée 1 est précédée d'une étape de réception E1.1 par le module de contrôle 14 d'un signal représentatif de la position des trains d'atterrissage 5 de l'aéronef AC.

À titre d'exemple, le signal représentatif de la position des trains d'atterrissage 5 est compris dans un ensemble de signaux représentatifs des caractéristiques de l'aéronef AC transmis par un centre de contrôle de la circulation aérienne, par l'aéroport ou par l'aéronef AC dont on détermine la masse et le centre de gravité.

Le procédé comprend également une étape d'évacuation de l'aéronef des dispositifs de pesée 1. Selon un mode de réalisation du procédé, le système comprend deux dispositifs de pesée 1 destinés chacun à recevoir les deux trains d'atterrissage 5 principaux et un dispositif de pesée 1 destiné à recevoir le train d'atterrissage 5 avant. Le dispositif de pesée 1 destiné à recevoir le train d'atterrissage 5 avant de l'aéronef AC est retiré pour pouvoir accrocher ledit train d'atterrissage avant à un véhicule de remorquage. L'aéronef AC peut alors être évacué des dispositifs de pesée 1 destiné à recevoir les trains d'atterrissage 5 principaux. Le véhicule de remorquage peut être un véhicule avec barre de remorquage ou sans barre de remorquage.

Ainsi, grâce au dispositif, au système et au procédé, tels que décrits ci-dessus, il est possible de suivre la position du centre de gravité d'un aéronef AC, d'éviter les risques de basculement vers l'arrière (« tail-tipping » en anglais) et de repérer précocement les écarts dans le but d'envoyer une alerte.

De même, après une intervention sur l'aéronef AC, lorsque des véhicules techniques utiles à cette intervention ont été retirés, l'aéronef AC sera dans une configuration de roulage. Des vérifications finales automatisées et des calculs de performance pourront être effectués avec la masse réelle de l'aéronef AC.

Par ailleurs, le système et le procédé permettent d'obtenir la masse réelle au décollage d'un aéronef AC ainsi que la position du centre de gravité lors de toutes opérations sur l'aéronef AC.

L'acquisition d'une masse précise d'un aéronef et plus particulièrement d'une information précise sur le centre de gravité permet :
- d'obtenir une confirmation indépendante des données d'un devis de poids et de centrage (« *Load and Trim sheet* » en anglais), ce qui améliore la sécurité,
- d'optimiser l'exploitation de l'aéronef AC en réduisant les marges de sécurité quant à la masse de l'aéronef AC et à son centre de gravité ; ceci procure une plus grande flexibilité pour les changements de dernière minute,
- d'avoir un intérêt particulier pour les aéroports qui limitent les performances au décollage et pour l'utilisation d'aéronefs cargos,
- à un aéroport de surveiller les dommages réels causés par la fatigue sur les aires de stationnement (« *apron* » en anglais), sur les voies de circulation (« taxiway » en anglais) ou sur les pistes (« *runway* » en anglais).

## Revendications

1. Dispositif de pesée pour aéronef, **caractérisé en ce qu'**il comprend :
- une plateforme de pesée (2) configurée pour recevoir un train d'atterrissage (5) de l'aéronef (AC) et générer des signaux de pesée,
- une première unité de calcul (4) configurée pour calculer une information de pesée à partir des signaux de pesée générés par la plateforme de pesée (2),
- une première unité de communication (3) configurée pour transmettre à un dispositif central (13) et recevoir des signaux, dont au moins un signal représentatif de l'information de pesée calculée par la première unité de calcul (4),
- une unité de roulage au sol (7) configurée pour déplacer la plateforme de pesée (2) sur une surface, l'unité de roulage au sol (7) comprenant :
• au moins une roue motrice et directrice (7.1) apte à être entraînée par un module moteur (7.3) et à être dirigée par un module directeur (7.4),
• au moins une roue menée (7.2),
la première unité de communication (3) étant configurée pour recevoir d'un module de contrôle des signaux de commande susceptibles de commander l'unité de roulage au sol (7).

2. Dispositif selon la revendication 1,
**caractérisé en ce qu'**il comprend une unité de calage (6) configurée pour caler le train d'atterrissage de l'aéronef sur la plateforme de pesée (2) lorsque le dispositif de pesée (1) est positionné au niveau du train d'atterrissage (5), l'unité de calage (6) comprenant :
- une paire de cales (6.1),
- un module d'actionnement (6.2) de la paire de cales (6.1) configuré pour contrôler les déplacements de la paire de cale (6.1) afin que le train d'atterrissage (5) de l'aéronef (AC) soit calé entre les cales (6.1),
la première unité de communication (3) étant configurée pour recevoir d'un module de contrôle des signaux de commande susceptibles de commander le module d'actionnement (6.2) de la paire de cales (6.1), la première unité de communication (3) étant également configurée pour émettre un signal de confirmation de calage lorsque l'aéronef (AC) est calé par la paire de cales (6.1).

3. Dispositif selon au moins une des revendications 1 à 2,
**caractérisé en ce qu'**il comprend en outre un ensemble de rampes pliables (8) configuré pour permettre l'accès du train d'atterrissage (5) de l'aéronef (AC) à la plateforme de pesée (2), l'ensemble de rampes pliables (8) étant également configuré pour permettre la sortie du train d'atterrissage (5) de l'aéronef (AC) de la plateforme de pesée (2).

4. Dispositif selon au moins une des revendications 1 à 3,
**caractérisé en ce que** la plateforme de pesée (2) comprend une matrice de cellules de charge (9), chaque cellule de charge (9) étant configurée pour générer et transmettre un signal de pesée à la première unité de calcul (4) configurée pour calculer l'information de pesée.

5. Dispositif selon au moins une des revendications 1 à 4,
**caractérisé en ce qu'**il comprend en outre au moins une unité de prise de vues, chaque unité de prise de vues (10) étant configurée pour générer un signal vidéo représentatif d'une prise de vues, la première unité de communication (3) étant apte à émettre des signaux vidéo représentatifs de la prise de vues générée par chaque unité de prise de vues (10).

6. Dispositif selon au moins une des revendications 1 à 5,
**caractérisé en ce qu'**il comprend en outre une unité de positionnement (11) configurée pour générer des signaux représentatifs de la position du dispositif de pesée (1), la première unité de communication (3) étant apte à émettre des signaux représentatifs de la position du dispositif de pesée (1).

7. Dispositif selon au moins une des revendications 1 à 6,
**caractérisé en ce qu'**il comprend en outre une unité de détermination de paramètres environnementaux (12) étant susceptible de générer des signaux représentatifs des paramètres environnementaux de la position où le dispositif de pesée (1) est susceptible de se trouver, l'unité de détermination de paramètres environnementaux (12) étant configurer pour transmettre à la première unité de calcul (4) les signaux représentatifs des paramètres environnementaux, la première unité de calcul (4) intégrant ces signaux au calcul de l'information de pesée.

8. Dispositif selon au moins une des revendications 1 à 7,
**caractérisé en ce que** le dispositif comprend en outre un module de contrôle, ledit module de contrôle comprenant :
- une première unité de saisie (14.1) configurée pour générer des signaux de commande aptes à commander l'unité de roulage au sol (7) du dispositif de pesée (1),
- une deuxième unité de saisie (14.2) configurée pour générer des signaux de commande aptes à commander le module d'actionnement (6.2) de la paire de cales (6) du dispositif de pesée (1),
- une première unité d'affichage (14.3) configurée pour afficher la position du dispositif de pesée (1) à partir des signaux représentatifs de la position du dispositif de pesée (1) émis par la première unité de communication (3),
- une deuxième unité de communication (14.5) configurée pour émettre les signaux de commande aptes à commander l'unité de roulage au sol (7) et les signaux de commande aptes à commander le module d'actionnement (6.2) de la paire de cales (6) et configurée pour recevoir les signaux représentatifs de la position du dispositif de pesée (1).

9. Dispositif selon au moins une des revendications 1 à 8,
**caractérisé en ce qu'**il comprend une deuxième unité d'affichage (14.4) configurée pour afficher des images vidéo à partir des signaux vidéo représentatifs d'une prise de vues générée par la ou les unités de prise de vues (10) du dispositif de pesée (1).

10. Système de détermination de la masse et du centre de gravité d'un aéronef,
**caractérisé en ce qu'**il comprend :
- au moins un dispositif de pesée (1) selon au moins une des revendications 1 à 9,
- un dispositif central (13) configuré pour déterminer la masse de l'aéronef et la position du centre de gravité de l'aéronef (AC), et
- un dispositif utilisateur (15) configuré pour recevoir un signal représentatif de la masse de l'aéronef (AC) et un signal représentatif de la position du centre de gravité de l'aéronef (AC).

11. Système selon la revendication 10,
**caractérisé en ce que** le dispositif central (13) comprend :
- une mémoire (13.1) stockant une base de données répertoriant des caractéristiques dimensionnelles d'aéronefs,
- une deuxième unité de calcul (13.2) configurée pour calculer la masse et une position du centre de gravité de l'aéronef (AC) à partir, d'une part, d'une l'information de pesée transmise par chaque dispositif de pesée (1) et, d'autre part, de caractéristiques dimensionnelles de l'aéronef (AC) extraites de la base de données,
- une troisième unité de communication (13.3) configurée pour transmettre au dispositif utilisateur (15) un signal représentatif de la masse de l'aéronef (AC) et un signal représentatif de la position du centre de gravité de l'aéronef (AC) calculés par la deuxième unité de calcul (13.2).

12. Système selon au moins une des revendications 10 à 11,
**caractérisé en ce que** le dispositif utilisateur (15) comprend :
- une quatrième unité de communication (18) de l'aéronef (AC) configurée pour recevoir un signal de confirmation de calage, un signal représentatif de la masse de l'aéronef (AC) et un signal représentatif de la position du centre de gravité de l'aéronef (AC),
- une troisième unité d'affichage (16) de l'aéronef (AC) configurée pour afficher la masse de l'aéronef (AC) et le centre de gravité de l'aéronef (AC) à partir du signal représentatif de la masse de l'aéronef (AC) et du signal représentatif de la position du centre de gravité de l'aéronef (AC) transmis par la troisième unité de communication (13.3),
- une quatrième unité d'affichage (17) de l'aéronef (AC) configurée pour afficher une confirmation du calage de l'aéronef à partir du signal de confirmation de calage émis par une première unité de communication (3) d'un dispositif de pesée (1).

13. Procédé d'utilisation du système de détermination de la masse et du centre de gravité d'un aéronef (AC) selon au moins une des revendications 10 à 12,
**caractérisé en ce qu'**il comprend :
- une étape (E1) de pré-positionnement de dispositifs de pesée (1) à un endroit où l'aéronef (AC) est destiné à s'arrêter, le nombre de dispositifs de pesée (1) ayant été préalablement défini à partir du nombre de trains d'atterrissage (5) devant être utilisés pour la mesure de la pesée,
- une étape (E2) de positionnement final des dispositif de pesée (1) à l'aide d'une unité de roulage au sol (7) de chaque dispositif de pesée (1) contrôlée par un module de contrôle (14) selon des positions correspondant aux positions des trains d'atterrissage (5) de l'aéronef (AC),
- une étape (E3) de roulage de l'aéronef (AC) sur les dispositifs de pesée (1),
- une étape (E4) de pesée de l'aéronef (AC) sur des plateformes de pesée (2) des dispositifs de pesée (1),
- une étape (E5) de détermination de la masse et de la position du centre de gravité de l'aéronef (AC) par un dispositif central (13),
- une étape (E6) de transmission à un dispositif utilisateur (15) d'un signal représentatif de la masse de l'aéronef (AC) et un signal représentatif de la position du centre de gravité de l'aéronef (AC),
- une étape (E7) d'affichage sur une unité d'affichage du dispositif utilisateur (15) de la masse de l'aéronef (AC) et de la position du centre de gravité de l'aéronef (AC).

14. Procédé selon la revendication 13,
**caractérisé en ce que** l'étape (E5) de détermination de la masse et de la position du centre de gravité est précédée d'une étape (E4.1) de calage des trains d'atterrissage (5) de l'aéronef (AC) sur au moins une plateforme de pesée (2).

15. Procédé selon au moins une des revendications 13 ou 14,
caractérisé en que l'étape (E2) de positionnement final des dispositifs de pesée (1) est précédée d'une étape (E1.1) de réception par le module de contrôle (14) d'un signal représentatif de la position des trains d'atterrissage (5) de l'aéronef (AC).
